(19) Europäisches Patentamt

European Patent Office

Office européen des brevets

(11) EP 0 717 568 A2

## (12) EUROPEAN PATENT APPLICATION

(43) Date of publication:
19.06.1996 Bulletin 1996/25

(51) Int. Cl.⁶: **H04N 9/83**

(21) Application number: 95119562.7

(22) Date of filing: 12.12.1995

(84) Designated Contracting States:
AT DE GB NL

(30) Priority: 12.12.1994 KR 3370994
20.12.1994 KR 3532494

(71) Applicant: LG ELECTRONICS INC.
Seoul (KR)

(72) Inventor: Maeng, Sung-Yeol
Euiwang, Kyungki-Do (KR)

(74) Representative: Cohausz & Florack
Patentanwälte
Kanzlerstrasse 8a
40472 Düsseldorf (DE)

(54) **Wide screen signal processing apparatus for PAL plus VCR**

(57) An improved wide screen signal processing apparatus for a PAL plus VCR capable of preventing a wide screen signal from interfering with a color burst and processing a wide screen signal through a certain path in recording and reproducing modes by demodulating or modulating a combined video signal outputted from a PAL plus broadcasting system in accordance with a switched marker signal and a PAL plus recognition signal and by delaying a wide screen signal interval and a marker signal interval for a predetermined time.

Printed by Rank Xerox (UK) Business Services
2.12.4/3.4

## Description

## BACKGROUND OF THE INVENTION

### 1. Field of the Invention

The present invention relates to a wide screen signal processing apparatus for a PAL plus video cassette tape recorder (VCR), and particularly to an improved wide screen signal processing apparatus for a PAL plus VCR capable of preventing a wide screen signal from interfering with a color burst and processing a wide screen signal through a certain path in recording and reproducing modes by demodulating or modulating a combined video signal outputted from a PAL plus broadcasting system in accordance with a switched marker signal and a PAL plus recognition signal, and by delaying a wide screen signal interval and a marker signal interval for a predetermined time.

### 2. Description of the Conventional Art

As well known to those skilled in the art, in an NTSC broadcasting method and a PAL plus broadcasting method, a video signal is, displayed in a letter box type on a screen. In addition, a 3/4 region of an active video region is used for a real purpose, and the remaining region is used for upper and lower black regions. When the above-mentioned method is adopted in the system, an aspect ratio 16:9 is not distorted on a television screen having an aspect ratio 4:3.

However, as a wide screen television having an aspect ratio 16:9 is developed, displaying a picture having an aspect ratio 16:9 on a wide screen television becomes necessary. In addition, as the use of the wide screen television has been widely spread, the broadcasting stations are preparing to make programs for both the aspect ratios 4:3 and 16:9.

When a signal corresponding to both the aspect ratios 4:3 and 16:9 is transmitted to a receiving device from a broadcasting station, a television or a PAL plus VCR are recognized whether or not a certain aspect ratio such as aspect ratios 4:3 and 16:9 is transmitted therefrom. In this regard, the European Telecommunications Standards Institute made a standard with respect to the wide screen signal, and all the broadcasting station follows the standard.

The wide screen signal is contained in a 23rd line of 25 lines corresponding to a vertical time in a system having 625 lines, and has an amplitude of 500mV in a black level.

In addition, the wide screen signal is filtered in a form of $sin^2$ and is transmitted from the broadcasting station at a speed of 5Mbps, and the lines of each combined video signal is locked at a base clock 5MHz.

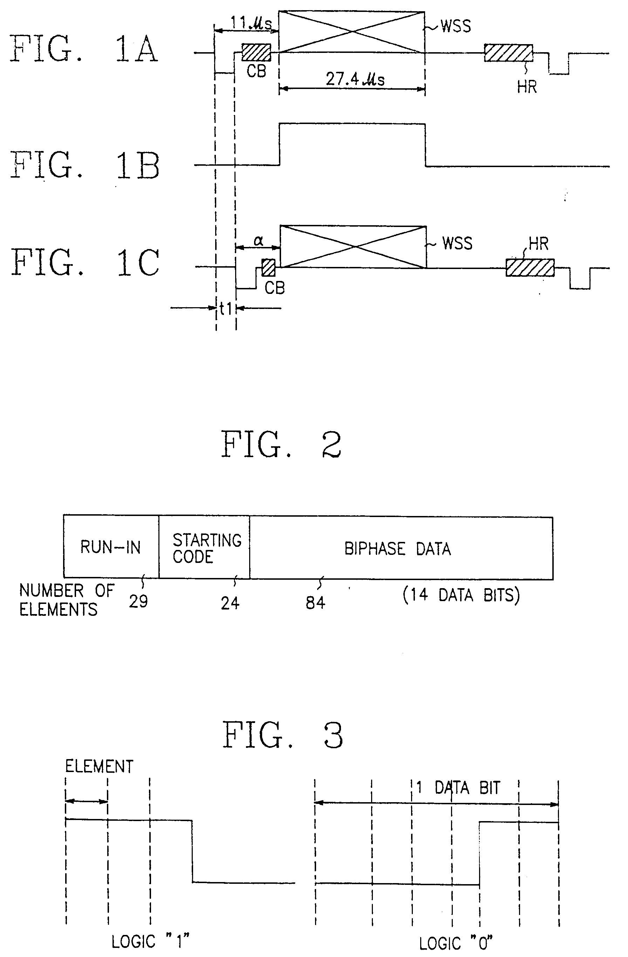

Generally, the wide screen signal WSS, as shown in Fig. 1A, is contained in a 23rd line from 11 µs to 27.7 µs in accordance with the standard. Here, the helper signal which is a high frequency component of a combined video signal should be demodulated in a recording mode, and should be redemodulated in a reproducing mode. The helper reference signal HR is used for the modulation and demodulation and is contained on the rear portion of the 23rd line. In addition, the wide screen signal WSS transmitted from the broadcasting station consists of 137 elements based on a system of 5MHz, and the first-occurring 29 elements correspond to a run-in data for a clock recovery, and the next 24 elements are used for a starting code, and the remaining 84 elements are the bi-phase data as shown in Fig. 3. That is, each bit of the bi-phase data, as shown in Fig. 3, consists of 6 elements, each denotes a logic "1" or a logic "0".

As described above, the wide screen signal WSS includes a certain information with respect to the aspect ratios of 16:9 or 4:3 which is transmitted from the broadcasting station or a video tape, and is separated from the combined video signal in accordance with a marker signal as shown in Fig. 1B. In addition, the thusly separated wide screen signal WSS is read, contained in a combined video signal, and recorded in a PAL plus VCR.

However, in case of a television set having an aspect ratio 4:3, and a wide screen television set and a PAL plus VCR each having an aspect ratio 16:9, when a wide screen signal WSS is re-contained in the combined video signal, a certain delay time, as shown in Fig. 1C, occurs for the time t1, and the wide screen signal WSS interferes with the color burst CB contained in an interval of 11 µs. In addition, in case of the PAL plus VCR, it is not adaptable to a tape having data recorded by the other VCR.

## SUMMARY OF THE INVENTION

Accordingly, it is an object of the present invention to provide a wide screen signal processing apparatus for a PAL plus VCR, which overcome the problems encountered in a conventional wide screen signal processing apparatus for a PAL plus VCR.

It is another object of the present invention to provide an improved wide screen signal processing apparatus for a PAL plus VCR capable of preventing a wide screen signal from interfering with a color burst and processing a wide screen signal through a certain path in recording and reproducing modes by demodulating or modulating a combined video signal outputted from a PAL plus broadcasting system in accordance with a switched marker signal and a PAL plus recognition signal and by delaying a wide screen signal interval and a marker signal interval for a predetermined time.

To achieve the above objects, in accordance with a first embodiment according to the present invention, there is provided a wide screen signal processing apparatus for a PAL plus VCR, which includes a data and synchronous separating unit for separating a combined synchronous signal and a video signal from a combined video signal applied thereto and for generating a system clock; a marker generating unit for outputting a 23rd line marker signal, a helper marker signal and a marker signal of a wide screen signal so as to read a wide screen signal in accordance with a combined synchronous signal outputted from the data and synchronous signal separating unit; a data reading unit for reading a wide screen signal in an interval of a 23rd line marker signal of a video data and for outputting the thusly read wide screen signal and a helper modulation/demodulation state signal; a microprocessor for outputting a plurality of mode bits in accordance with a certain selected operation mode; a marker switching unit for switching a marker signal outputted from the marker generating unit and for generating a PAL plus identification signal in accordance with a plurality of mode bits outputted from the microprocessor and a helper modulation/demodulation state signal outputted from the data reading unit; a helper processing unit for modulating or demodulating a combined video signal in accordance with a marker signal outputted from the marker switching unit and a PAL plus identification signal; and a wide screen signal adding unit for adding a wide screen signal outputted from the data reading unit to a combined video signal outputted from the helper processing unit.

To achieve the above objects, in accordance with a second embodiment according to the present invention, there is provided a wide screen signal processing apparatus for a PAL plus VCR, which includes a data and synchronous signal separating unit for separating a combined synchronous signal and a video data from a combined video signal and for generating a system clock; a marker generating unit for outputting a 23rd marker signal, a helper marker signal, and a wide screen signal so as to read a wide screen signal in accordance with a combined synchronous signal and a system clock outputted from the data and synchronous signal separating unit; a data reading unit for reading a wide screen signal in an interval of a 23rd line marker signal of a video data and for outputting the thusly read wide screen signal; a helper processing unit for modulating or demodulating a helper in an interval of a helper marker signal outputted from the marker generating unit; a delay compensating unit for compensating an interval of a marker signal outputted from the marker generating unit as much as the time delayed between the combined video signal outputted from the helper processing unit and the combined video signals outputted from an input terminal; and a wide screen signal adding unit for adding a wide screen signal outputted from the data reading unit to a combined video signal outputted from the helper processing unit in accordance with a marker signal outputted from the delay compensating unit.

BRIEF DESCRIPTION OF THE DRAWINGS

Figs. 1A through 1C are views of a data contained in a 23rd line of a vertical interval of a conventional wide screen signal processing apparatus for a PAL plus VCR.
Fig. 2 is a view of a format of a wide screen signal of Fig. 1.
Fig. 3 is a view of a coded bi-phase data state of Fig. 2.

Fig. 4 is a block diagram of a wide screen signal processing apparatus for a PAL plus VCR of a first embodiment according to the present invention.
Fig. 5 is a block diagram of a marker generating unit of Fig. 4 according to the present invention.
Fig. 6 is a circuit diagram of a marker extension unit of Fig. 5 according to the present invention.
Fig. 7 is a block diagram of a data reading unit of Fig. 4 according to the present invention.
Fig. 8 is a circuit of a marker switching unit of Fig. 4 according to the present invention.
Figs. 9A through 9G are wave forms of an input/output signal of each element of a marker switching unit of Fig. 5 according to the present invention.
Figs. 10A through 10C are wave forms of first through fourth signals of Fig. 5 according to the present invention.
Fig. 11 is a table of a combination of signals applied to a marker switching unit of Fig. 4 according to the present invention.
Fig. 12 is a block diagram of a wide screen signal processing apparatus for a PAL plus VCR of a second embodiment according to the present invention.
Fig. 13 is a block diagram of a delay compensating unit of Fig. 12 according to the present invention.

DETAILED DESCRIPTION OF THE INVENTION

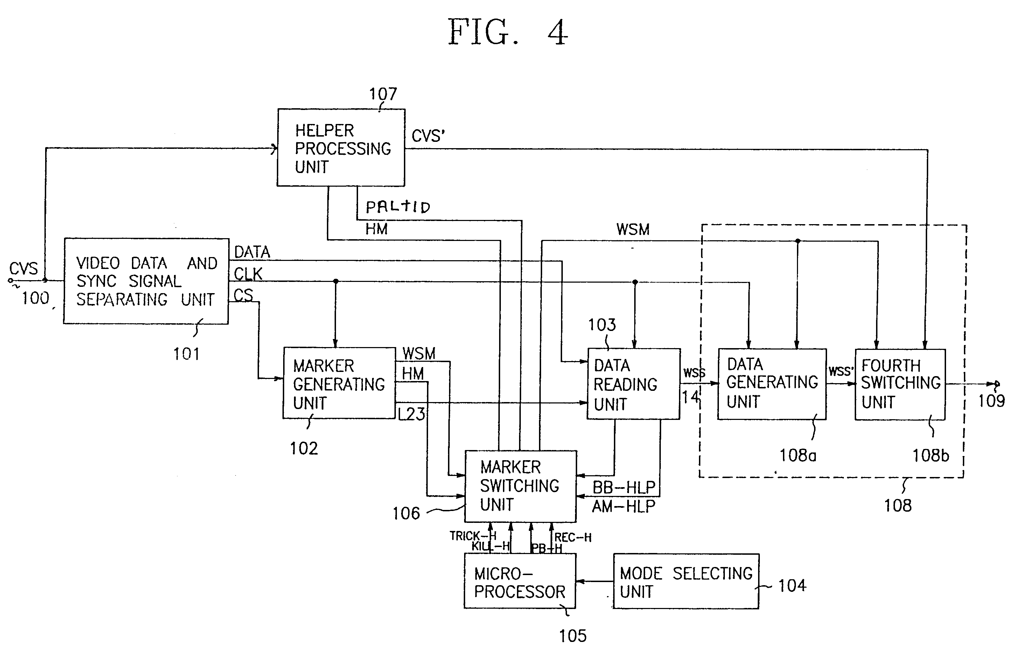

Fig. 4 shows a wide screen signal processing for a PAL plus VCR of a first embodiment according to the present invention, which includes a data and synchronous signal separating unit 101 for separating a combined synchronous signal CS and a video data DATA from a combined video signal CVS transmitted from a broadcasting station through an input terminal 100 and for generating a system clock CLK, a marker generating unit 102 for counting the pulse of the combined synchronous signal CS outputted from the data and synchronous signal separating unit 101, generating a helper marker signal HM and a 23rd line marker signal L23, counting the interval of the 23rd line marker signal L23 in accordance with a system clock CLK, and outputting a marker signal WSM in which the interval of a wide screen signal is a high level, a data reading unit 103 for detecting and reading a wide screen signal WSS contained in the video data DATA outputted from the data and synchronous signal separating unit 101 in accordance with the 23rd line marker signal L23 outputted from the marker generating unit 102 as an enable signal and for outputting the thusly read wide screen signal WSS, a helper modulation state signal AM-HLP, and a helper demodulation state signal BB-HLP, a mode selecting unit 104 for selecting a certain operation mode of a PAL plus VCR, a microprocessor 105 for outputting a recording mode signal REC-H, a reproducing mode signal PB-H, a speed mode signal TRICK-H, and a compulsion helper clearing mode signal KILL-H in accordance with a mode selected by the mode selecting unit 104, a marker switching unit 106 for switching a helper marker signal HM and a marker signal WSM outputted from the marker generating unit 102 in accordance with the recording mode signal REC-H, the reproducing mode signal PB-H, the speed mode signal TRICK-H, and the compulsion helper clearing mode signal KILL-H outputted from the microprocessor 105 and the helper modulation state signal AM-HLP and the helper demodulation state signal BB-HLP outputted from the data reading unit 103, a helper processing unit 107 for modulating/demodulating the helper signal of the combined video signal CVS in accordance with the helper marker signal HM and the PAL plus identification signal PAL+ID which are switched by the marker switching unit 106, and a wide screen signal adding unit 108, which is controlled by the marker signal WSM outputted from the marker switching unit 106, for adding the wide screen signal WSS outputted from the data reading unit 103 into the combined video signal CVS' outputted from the helper processing unit 107 and for outputting to an output terminal 109.

The wide screen signal adding unit 108 includes a data generating unit 108a for reformatting and synchronizing the wide screen signal WSS outputted from the data reading unit 103 in accordance with a system clock CLK in accordance with a marker signal WSM outputted from the marker switching unit 106, and a fourth switching unit 108b for adding the wide screen signal WSS', reformatted by the data generating unit 108a in accordance with a marker signal WSM, to a combined video signal CVS'.

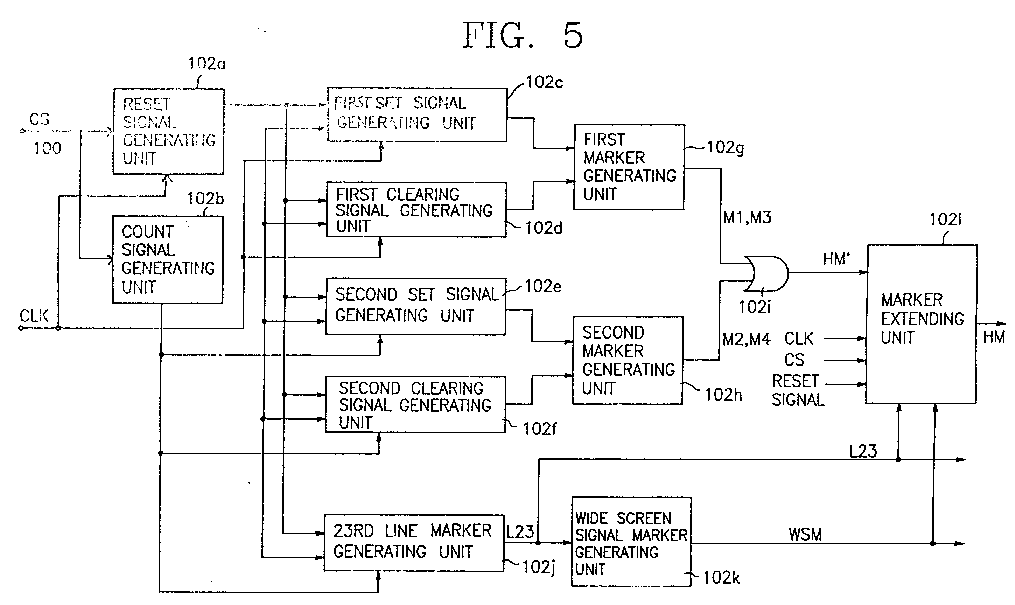

The marker generating unit 102, as shown in Fig. 5, includes a reset signal generating unit 102a for counting the combined synchronous signal CS outputted from the data and synchronous signal separating unit 101 in accordance with a system clock CLK and for outputting a reset signal, a count signal generating unit 102b for counting the combined synchronous signal CS in accordance with a system clock CLK and for generating a certain pulse signal in a certain line except the lines of the synchronous pulse signal and vertical synchronous signal, first and second set signal generating units 102c and 102e for counting the pulse signal outputted from the count signal generating unit 102b and for outputting a marker signal, respectively, in accordance with a reset signal outputted from the reset signal generating unit 102a, first and second clearing signal generating units 102d and 102f for counting the pulse signal outputted from the count signal generating unit 102b and for generating a clearing signal in accordance with a reset signal outputted from the reset signal generating unit 102a, a first marker signal generating unit 102g for outputting first and third marker signals M1 and M3 in accordance with a marker set signal outputted from the first set signal generating unit 102c and a clearing signal outputted from the first clearing signal generating unit 102d, a second marker signal generating unit 102h for outputting the second and fourth marker signals M2 and M4 in accordance with a marker set signal outputted from the second set signal generating unit 102e and a clearing signal outputted from the second clearing signal generating unit 102f, an OR-gate 102i for OR-ing the second and fourth marker signals M2 and M4 outputted from the second marker signal generating unit 102h and the first and third marker signals M1 and M3 outputted from the first marker signal generating unit 102g and for outputting a helper marker signal HM', a 23rd line marker generating unit 102j for counting the pulse signal outputted from the count signal generating unit 102b and for outputting the 23rd line marker signal L23 in accordance with a reset signal outputted from the reset signal generating unit 102a, a wide screen signal marker generating unit 102k for counting the 23rd marker signal L23 outputted from the 23rd line marker generating unit 102j in accordance with a system clock and for outputting a marker signal WSM of a high level in a certain interval corresponding to the wide screen signal WSS, and a marker extension unit 102l for receiving a marker signal WSM, a 23rd line marker signal L23, a system clock CLK, and a helper marker signal HM' outputted from the wide screen signal marker generating unit 102k, the 23rd line marker generating unit 102k, the data and synchronous signal separating unit 101, and the OR-gate 102i, respectively, and for outputting a helper reference signal HR, a helper marker signal HM for marking a helper interval.

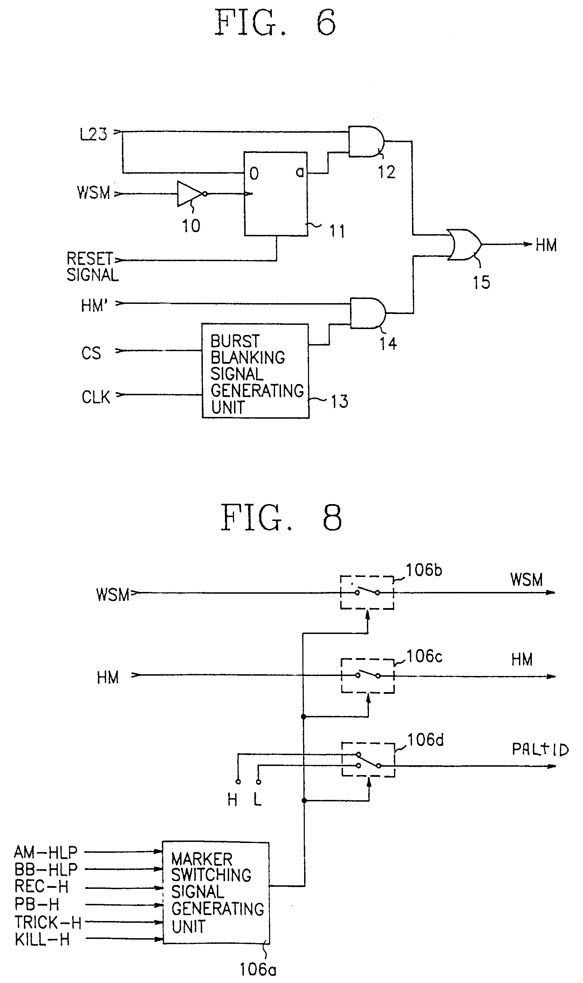

The marker extension unit 102l, as shown in Fig. 6, includes an invertor 10 for inverting a marker signal WSM outputted from the wide screen signal marker generating unit 102k, a flip-flop 11, which is initialized by a reset signal, for receiving an output signal of the invertor 10 through a clock terminal, latching an electric power VCC outputted from a data terminal D, an AND-gate 12 for ANDing the output signal of the flip-flop 11 and the 23rd line marker signal L23 outputted from the 23rd marker generating unit 102j, a burst blanking signal generating unit 13 for outputting a burst blanking signal so as to blank the color burst interval, an AND-gate 14 for ANDing the burst blanking signal outputted from the burst blanking signal generating unit 13 and the helper marker signal HM' outputted from the OR-gate 102i, and an OR-gate 15 for ORing the output signals of the AND-gate 14 and the AND-gate 12 and for outputting a helper marker signal HM.

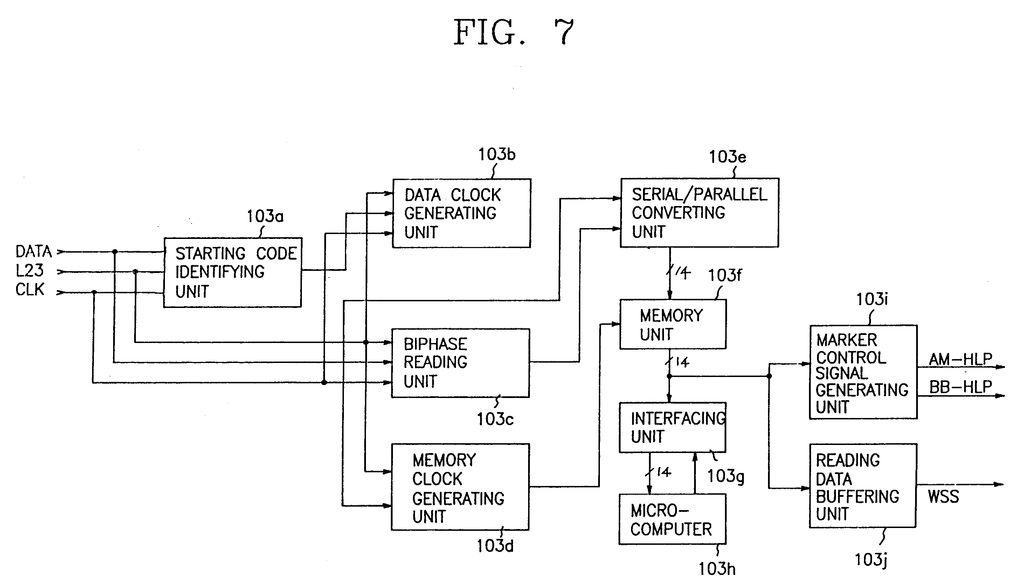

The data reading unit 103, as shown in Fig. 7, includes a starting code identifying unit 103a for shifting the 23rd marker signal L23 outputted from the marker generating unit 102 in accordance with a system clock CLK, identifying the starting code of the wide screen signal WSS, and outputting a starting signal, a data clock generating unit 103b for six-dividing the system clock CLK and for generating a data clock in accordance with a starting signal outputted from the starting code identifying unit 103a, a bi-phase reading unit 103c for counting the 23rd marker signal L23 in accordance with a system clock CLK and for reading a bi-phase data of 14 bits contained in the video data DATA outputted from the data and synchronous signal separating unit 101 as a non-return to zero modulation data in accordance with a starting signal outputted from the starting code identifying unit 103a, a memory clock generating unit 103d for counting the data clock outputted from the data clock generating unit 103b and for generating a memory clock of a high level in a 16th data clock, a serial/parallel converting unit 103d for converting a serial data of 14 bits outputted from the bi-phase reading unit 103c in accordance with a data clock outputted from the data clock generating unit 103b, a memory unit 103f for storing the data outputted from the serial/parallel converting unit 103d in accordance with a memory clock outputted from the memory clock generating unit 103d, an interfacing unit 103g for interfacing the transmission of the data outputted from the memory unit 103f, a microcomputer 103h for reading the data outputted from the interfacing unit 103g and for controlling the interfacing unit 103g, a marker control signal generating unit 103i for decoding the data outputted from the memory unit 103f and for outputting a helper modulation state signal AM-HLP and a helper demodulation state signal BB-HLP, and a reading data buffering unit 103j for buffering the data outputted from the memory unit 103f and for outputting a wide screen signal WSS.

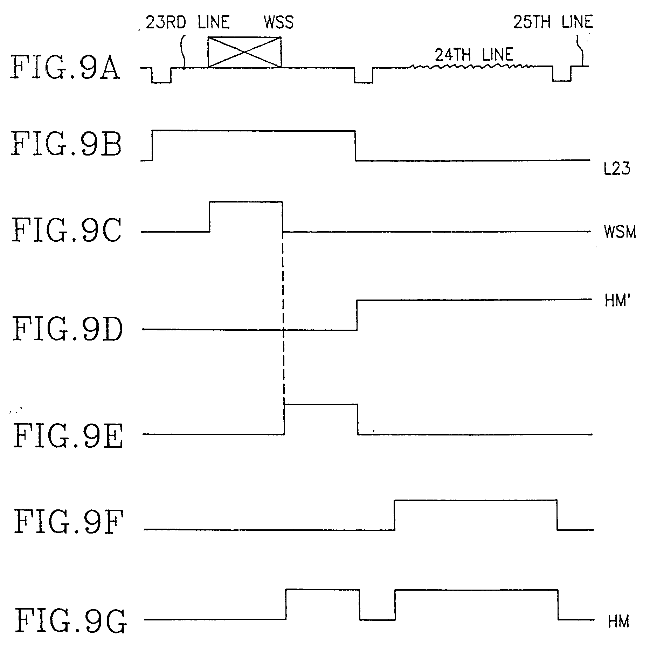

The marker switching unit 106, as shown in Fig. 8, includes a marker switching signal generating unit 106a for generating a marker switching signal in accordance with a helper modulation state signal AM-HLP and a helper demodulation state signal BB-HLP outputted from the data reading unit 103, and a recording mode signal REC-H, a reproducing mode signal PB-H, a speed mode signal TRICK-H, and a compulsion helper clearing mode signal KILL-H outputted from the microprocessor 105, and first and second switching units 106b and 106c for outputting or blocking the marker signal WSM and the helper marker signal HM outputted from the marker generating unit 102 in accordance with a marker switching signal outputted from the marker switching signal generating unit 106a, and a third switching unit 106d for outputting a PAL plus identification signal PAL+ID of a high level H or a low level L.

The operation of a PAL plus VCR wide screen signal processing apparatus of a first embodiment according to the present invention will be explained with reference to the accompanying drawings.

To begin with, when a combined video signal CVS having a wide screen signal WSS, as shown in Fig. 9A, is inputted to the data and synchronous signal separating unit 101 from a broadcasting station, the data and synchronous signal separating unit 101 separates a video data DATA and a combined synchronous signal CS from the combined video signal CVS and generates a system clock CLK.

The reset signal generating unit 102a of the maker generating unit 102 counts the combined synchronous signal CS in accordance with a system clock CLK, and generates a reset signal when a vertical synchronous pulse signal line is inputted, and the count signal generating unit 102b generates pulse signals in a certain line except the line of the synchronous pulse signal and vertical synchronous pulse signal by counting the combined synchronous signal CS in accordance with a system clock CLK.

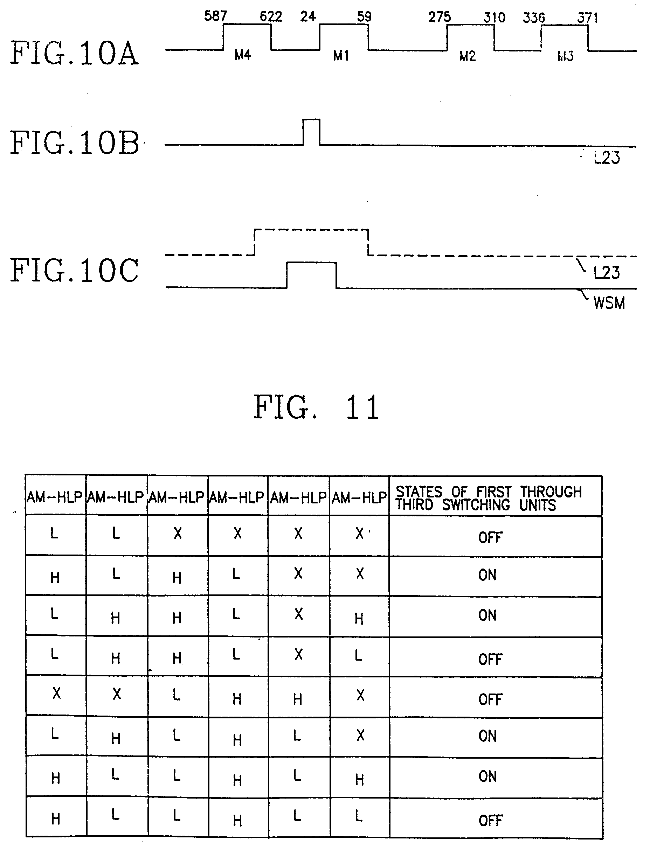

The first and second set signal generating units 102c and 102e counts the pulse signal outputted from the count signal generating unit 102b from the input time of a reset signal outputted from the reset signal generating unit 102a, and outputs a marker signal at the starting point of 24th, 275th, 336th and 587th lines so that marker signals M1 and M4 as shown in Fig. 10A are generated. In addition, the first and second clearing signal generating units 102d and 102f output a clearing signal at the starting points of 60th, 311st, 372nd, and 623rd so as to clear the marker signals M1 through M4.

In addition, as shown in Fig. 10A, the first marker generating unit 102g outputs the first marker signal M1, which is a high level until the 59th line, and the second marker signal M3 which is a high level from the 336th line to the 371st line along a field, and the second marker generating unit 102h outputs the second marker signal M2 which is a high level from the 275th line to the 310th line and the third marker signal M3 which is a high level from the 587 line to the 622 line along the field. Thereafter, the OR-gate 102i ORs the marker signals M1 through M4, and as shown in Fig. 9D, applies a helper marker signal HM' of a high level in the lines in which a helper is contained to the marker extension unit 102l.

In addition, the 23rd line marker generating unit 102j counts the pulse signals outputted from the count signal generating unit 102b from the input time of a reset signal outputted from the reset signal generating unit 102a, and as shown in Fig. 9B, outputs the 23rd line marker signal L23 which is a high level in the 23rd line, and the wide screen signal marker generating unit 102k counts the 23rd line marker signal L23 in accordance with a system clock CLK, and as shown in Fig. 9C, outputs a marker signal WSM which is a high level in an interval in which a wide screen signal WSS is contained.

Thereafter, the burst blanking signal generating unit 13 of the marker extension unit 102l counts the width of the combined synchronous signal SC in accordance with a system clock CLK, and outputs a burst blanking signal so as to blank the interval in which a color burst is contained in its each line, and the AND-gate 14 ANDs the burst blanking signal and the helper marker signal HM' as shown in Fig. 9D, and outputs a certain signal as shown in Fig. 9F. In addition, the invertor 10 inverts the marker signal WSM, and the flip-flop 11 latches the signal of a high level in accordance with a rising edge of a signal outputted from the invertor 10, and the AND-gate 12 ANDs the signal outputted from the flip-flop 11 and the 23rd marker signal L23. In addition, as shown in Fig. 9E, the AND-gate 12 outputs a signal so as to mark the helper reference signal HR. The OR-gate 15 ORs the signal outputted from the AND-gates 12 and 14, respectively, and outputs a helper marker signal HM as shown in Fig. 9G.

Referring to Fig. 7, the starting code identifying unit 103a of the data reading unit 103, which consists of registers and comparators and is synchronized, shifts the video data DATA during an interval of the 23rd line marker signal L23, compares the previously set starting code with part of the video data DATA, and outputs a starting code of a high level from the coincident point as a result of the comparison to the end portion of the 23rd line marker signal L23. The data clock generating unit 103b outputs a data clock which is obtained by six-dividing the system clock CLK during the interval of the starting signal outputted from the starting code identifying unit 103a, and the bi-phase reading unit 103c reads the bi-phase data of 14 bits contained in the video data DATA as a data clock with respect to a non-return to zero modulation. In addition, the memory clock generating unit 103d generates a memory clock of a high level in a 16th data clock of the intervals of the 23rd line marker signal L23.

In addition, the serial/parallel converting unit 103e latches the bi-phase data of 14 bits outputted from the bi-phase reading unit 103c in accordance with a data clock, and converts the data into a parallel data of 14 bits, and the memory unit 103f stores the parallel data of 14 bits in accordance with a memory clock outputted from the memory clock generating unit 103d.

The parallel data of 14 bits stored in the memory unit 103f is applied to the microcomputer 103h through the interfacing unit 103g, and the microcomputer 103h identifies the aspect ratio of the combined video signal CVS and the transmission of the PAL plus signal.

The marker control signal generating unit 103i decodes the parallel data of 14 bits and outputs a helper modulation state signal AM-HLP and a helper demodulation state signal BB-HLP so as to provide an information with respect to a recording mode or a reproducing mode, and the reading data buffering unit 103j buffers the parallel data of 14 bits and outputs a wide screen signal WSS.

Meanwhile, the microprocessor 103 applies a recording mode signal REC-H, a reproducing mode signal PB-H, a speed mode signal TRICK-H, and a compulsion helper clearing mode signal KILL-H to the marker switching unit 106 in accordance with a certain mode selected by the mode selecting unit 103.

Referring to Fig. 8, the marker switching signal generating unit 106a of the marker switching unit 106 combines 4-bit mode signals REC-H, PB-H, TRICK-H, and KILL-H outputted from the microprocessor 103 and the helper modulation state signal AM-HLP and the helper demodulation state signal BB-HLP outputted from the data reading unit 103, as shown in Fig. 11, and outputs a marker switching signal so that the switching units 106b, 106c, and 106d are turned on/off. Thereafter, the first and second switching units 106b and 106c pass the marker signal WSM and the helper marker signal HM when they are turned on, and block the marker signal WSM and the helper marker signal HM when they are turned off. In addition, the third switching unit 106c outputs a PAL plus identification signal PAL+ID of a high level H to the helper processing unit 107 when it is turned off, and outputs the PAL plus identification signal PAL+ID of a low level L to the helper processing unit 107 when it is turned on, and when it receives the PAL plus identification signal PAL+ID od a low level L, it bypasses the combined video signal CVS to the wide screen signal adding unit 108.

The helper processing unit 107 receives the PAL plus identification signal PAL+ID of a high level, and modulates or demodulates a helper component of the combined video signal CVS during an interval of a helper marker HM, and outputs the thusly modulated or demodulated combined video signal CVS' to the wide screen signal adding unit 108.

Thereafter, the data generating unit 108a of the wide screen signal adding unit 108 is enabled in accordance with a marker signal WSM outputted from the marker switching unit 106 and synchronizes part of the wide screen signal WSS of 14 bits outputted from the data reading unit 103 in accordance with a system clock CLK, and the fourth switching unit 108b adds a wide screen signal WSS' outputted from the data generating unit 108a to the combined picture signal CVS' outputted from the helper processing unit 107 during an interval of the marker signal WSM, and the combined video signal CVS' having the wide screen signal WSS' is applied to the output terminal 109.

As described above, a wide screen signal processing apparatus for a PAL plus VCR is directed to bypassing a marker signal when it is necessary by providing a marker switching unit for outputting a PAL plus identification signal, reading a wide screen signal, adding the thusly read wide screen data to a combined video signal having modulated and demodulated helper signals, so that it is adaptable to the tape recorded by other VCR, and the thusly added data prevents a color burst.

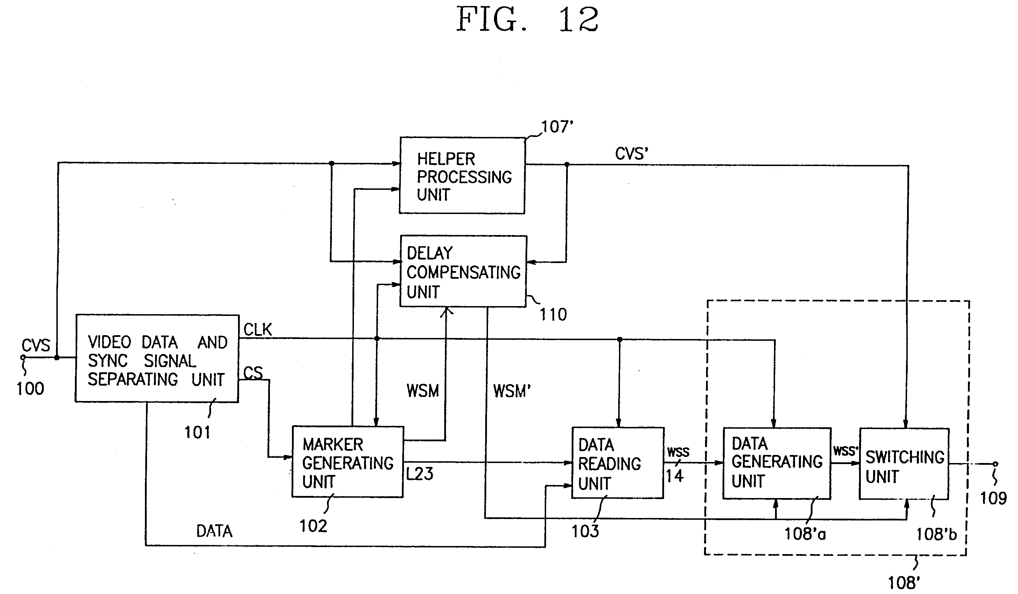

Meanwhile, Fig. 12 shows the wide screen signal processing apparatus for a PAL plus VCR of a second embodiment according to the present invention, which includes a helper processing unit 107' for modulating or demodulating a helper signal in an interval of a helper marker signal HM outputted from a data and synchronous signal separating unit 101, a marker generating unit 102, a data reading unit 103, and a marker generating unit 102, a delay compensating unit 110 for compensating an interval of the marker signal WSM outputted from the marker generating unit 102 for a predetermined time as much as the time delayed between the combined video signal CVS' outputted from the helper processing unit 107' and the combined video signal CVS outputted from the input terminal 100, and a wide screen signal adding unit 108', which is controlled in accordance with a marker signal WSM' outputted from the delay compensating unit 110, for adding the wide screen signal WSS outputted from the data reading unit 103 to the combined video signal CVS' outputted from the helper processing unit 107' and for outputting to the output terminal 109.

The wide screen signal adding unit 108' includes a data generating unit 108'a, which is controlled in accordance with a marker signal WSM' compensated by the delay compensating unit 110, for synchronizing and reformatting the wide screen signal WSS outputted from the data reading unit 103 to a system clock CLK, and a switching unit 108'b, which is controlled in accordance with a marker signal WSM', for adding the wide screen signal reformatted by the data generating unit 108'a to a combined video signal CVS' outputted from the helper processing unit 107'.

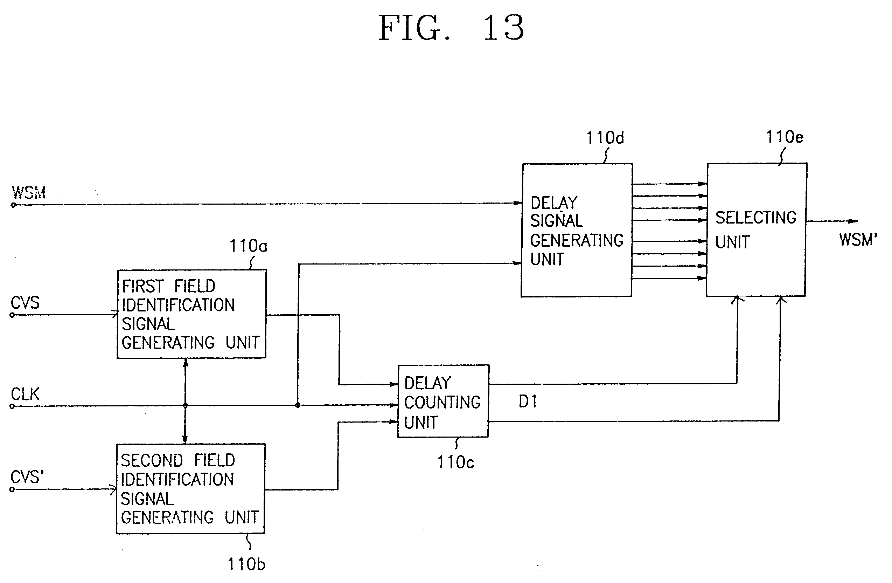

The delay compensating unit 110, as shown in Fig. 13, includes a first field identification signal generating unit 110a for identifying the field of the combined video signal CVS outputted from the input terminal 100, a second field identification signal generating unit 110b for identifying the field of the combined video signal CVS' outputted from the helper processing unit 107', a delay counting unit 110c for counting the difference of the field identification signals outputted from the second field identification generating unit 110b and the first field identification generating unit 110a, respectively, in accordance with a system clock CLK, a delay signal generating unit 110d for delaying the marker signal WSM outputted from the marker generating unit 102 in accordance with a system clock CLK and for outputting the marker signal as many as the number of the clocks from the first clock to a predetermined clock, and a selecting unit 110e for selecting a marker signal corresponding to a selection control signal D1 outputted from the delay counting unit 110c of the marker signals outputted from the delay signal generating unit 110d.

The operation of the wide screen signal processing apparatus for a PAL plus VCR of a second embodiment according to the present invention will now be explained with reference to the accompanying drawings.

To begin with, a described in the first embodiment, he data and synchronous signal separating unit 101 generates a system clock CLK, a combined synchronous signal CS, and a video data DATA, and the marker generating unit 102 generates a helper marker signal HM, a 23rd line marker signal L23, and a marker signal WSM.

The helper processing unit 107' modulates or demodulates the helper which is a high frequency component of a luminance signal of the combined video signal CVS and delays the thusly modulated or demodulated combined video signal CVS' for a predetermined time.

Referring to Fig. 13, the first and second field identification signal generating units 110a and 110b of the delay compensating unit 110 identify the field of the combined video signals CVS and SVS' and apply a field identification signal to the delay counting unit 110c, respectively. The delay counting unit 110c counts the difference between the field identification signals in accordance with a system clock CLK, and outputs a selection control signal D1 which denotes the number of the clock counted.

The delay signal generating unit 110d delays the marker signal WSM outputted from the marker generating unit 102 in accordance with a system clock CLK, and applies the marker signals delayed as much as the number of the clock from the first clock to a certain clock.

Thereafter, the selecting unit 110e selects a marker signal corresponding to the selection control signal D1 outputted from the delay counting unit 110c of the marker signals and outputs a marker signal WSM'.

That is, the number of the clocks corresponding to the delay time between the field identification signals is computed by the following expression:

$$\text{Clock number (n)} = \frac{\text{delay time}}{\text{clock time}}$$

For example, in case that a system clock CLK of 5MHz is adopted, as a result, the delay time of $2\mu s$ occurs, and the clock number (n) is 10, and when the marker signal WSM is delayed by 10 clocks, a certain marker signal WSM in which a delay is compensated is obtained.

Meanwhile, the data reading unit 103 synchronizes a wide screen signal WSS in the interval of the 23rd line marker signal L23 outputted from the marker generating unit 102 of the video data DATA outputted from the data reading unit 103 and the synchronous signal separating unit 101. Thereafter, the data generating unit 108'a is enabled in accordance with a marker signal WSM' outputted from the delay compensating unit 110, and synchronizes and reformats the wide screen signal WSS outputted from the data reading unit 103 in accordance with a system clock CLK. In addition, the switching unit 108'b adds the wide screen signal reformatted by the data generating unit 108's to the combined video signal CVS' outputted from the helper processing unit 107' in accordance with a marker signal WSM'.

As described above, the wide screen signal processing apparatus for a PAL plus VCR according to the present invention is directed to adding a wide screen signal to the point of 11 $\mu s$ at a decreasing time of the combined synchronous signal by providing a delay compensating unit for compensating the interval of the marker signal outputted from a marker generating unit as much as the delay time, so that the added data does not interfere with a color burst, thus maintaining a desired PAL plus resolution.

**Claims**

1. A wide screen signal processing apparatus for a PAL plus VCR, comprising:

data and synchronous separating means for separating a combined synchronous signal and a video signal from a combined video signal applied thereto and for generating a system clock;

marker generating means for outputting a 23rd line marker signal, a helper marker signal and a marker signal of a wide screen signal so as to read a wide screen signal in accordance with a combined synchronous signal outputted from said data and synchronous signal separating means;

data reading means for reading a wide screen signal in an interval of a 23rd line marker signal of a video data and for outputting the thusly read wide screen signal and a helper modulation/demodulation state signal;

a microprocessor for outputting a plurality of mode bits in accordance with a certain selected operation mode;

marker switching means for switching a marker signal outputted from said marker generating means and for generating a PAL plus identification signal in accordance with a plurality of mode bits outputted from said microprocessor and a helper modulation/demodulation state signal outputted from said data reading means;

helper processing means for modulating or demodulating a combined video signal in accordance with a marker signal outputted from said marker switching means and a PAL plus identification signal; and

wide screen signal adding means for adding a wide screen signal outputted from the data reading means to a combined video signal outputted from said helper processing means.

2. The apparatus of claim 1, wherein said marker generating means includes:

reset signal generating unit for outputting a reset signal in accordance with a combined synchronous signal and a system clock outputted from the data and synchronous signal separating means;

count signal generating unit for generating a certain pulse signal in a certain line except in the lines of a synchronous pulse signal and a vertical synchronous pulse signal in accordance with a combined synchronous signal and a system clock outputted from the data and synchronous signal separating means;

first and second set signal generating means for counting the pulse signal outputted from said count signal generating unit and for outputting a marker set signal, respectively, in accordance with a reset signal outputted from said reset signal generating means;

first and second clearing signal generating means for counting the pulse signal outputted from the count signal generating unit and for generating a clearing signal in accordance with a reset signal outputted from the reset signal generating means;

first marker signal generating means for outputting first and third marker signals in accordance with a marker set signal outputted from said first set signal generating means and a clearing signal outputted from said first clearing signal generating unit;

second marker signal generating means for outputting second and fourth marker signals in accordance with a marker set signal outputted from said second set signal generating means and a clearing signal outputted from said second clearing signal generating unit;

an OR-gate for ORing second and fourth marker signals outputted from said second marker signal generating means and first and third marker signals outputted from said first marker signal generating unit and for outputting a helper marker signal;

23rd line marker generating means for outputting a 23rd line marker signal in accordance with a reset signal outputted from the reset signal generating means;

wide screen signal marker generating means for receiving a 23rd line marker signal outputted from said 23rd marker generating means and for outputting a marker signal of a wide screen signal of a high level in an interval corresponding to a wide screen signal; and

marker extension means for receiving a marker signal of a wide screen signal, a 23rd marker signal, a system clock, and a helper marker signal outputted from the 23rd marker generating means, the data and synchronous signal separating means, and the OR-gate, respectively, and for outputting an extended helper marker signal so as to mark the interval of a helper reference signal and a helper.

3. The apparatus of claim 2, wherein said marker extension means includes:

an invertor for inverting a marker signal of a wide screen signal outputted from the wide screen signal marker generating means;

a flip-flop for latching a signal of a high level in accordance with an output signal of said invertor;

a first AND-gate for ANDing an output signal of said flip-flop and a 23rd line marker signal outputted from the 23rd line marker generating means;

burst blanking signal generating means for outputting a burst blanking signal so as to blank a color burst interval;

a second AND-gate for ANDing a burst blanking signal outputted from said burst blanking signal generating means and a helper marker signal outputted from the OR-gate; and

an OR-gate for ORing the signals outputted from said first AND-gate and said second AND-gate and outputting an extended helper marker signal.

4. The apparatus of claim 1, wherein said data reading means includes:

starting code identifying means for identifying a starting code of a wide screen signal in an interval of a 23rd line marker signal outputted from the marker generating means and for outputting a starting signal;

data clock generating means for generating a data clock by dividing a system clock in accordance with a starting signal outputted from said starting code identifying means;

bi-phase reading means for reading a bi-phase data of 14 bits contained in a wide screen signal;

memory clock generating means for generating a memory clock of a high level in a 16th data clock outputted from said data clock generating means;

serial/parallel converting means for converting a serial data of 14 bits into a parallel data outputted from said bi-phase reading means in accordance with a data clock outputted from said data clock generating means;

a memory for storing a data outputted from said serial/parallel converting means in accordance with a memory clock outputted from said memory clock generating means;

a microcomputer for receiving and identifying a data outputted from said memory through the interfacing means;

marker control signal generating means for decoding a data outputted from the memory and for outputting a helper modulation state signal and a helper demodulation state signal; and

reading data buffering means for buffering a data outputted from the memory and for outputting the thusly read wide screen signal.

5. The apparatus of claim 1, wherein said marker switching means includes:

marker switching signal generating means for generating a marker control signal in accordance with a helper modulation/demodulation state signal outputted from the data reading means and a plurality of mode bits outputted from the microprocessor;

first and second switching means for switching a marker signal outputted from said marker generating means in accordance with a marker switching signal outputted from said marker switching signal generating means; and

third switching means for outputting a PAL plus identification sinal of a high level or a low level in accordance with a marker control signal outputted from said marker control signal generating means.

6. The apparatus of claim 1, wherein said wide screen signal adding means includes:

data generating means enabled in accordance with a marker signal of a wide screen signal outputted from the marker switching means for reformatting a wide screen signal outputted from the data reading means; and

switching means for adding a wide screen signal reformatted by said data generating means to a combined video signal outputted from the helper processing means.

7. The apparatus of claim 1, wherein said microprocessor is directed to outputting a recording mode signal, a reproducing mode signal, a speed mode signal, and a compulsion helper clearing signal, respectively.

8. The apparatus of claim 4, wherein said starting code identifying means includes:

a shift register for shifting a video data in an interval of a 23rd line marker signal; and

a comparator for comparing a data shifted by said shift register and a previously set data pattern.

9. The apparatus of claim 4, wherein said data clock generating means is directed to generating a data clock by six-dividing a system clock.

10. A wide screen signal processing apparatus for a PAL plus VCR, comprising:

data and synchronous signal separating means for separating a combined synchronous signal and a video data from a combined video signal and for generating a system clock;

marker generating means for outputting a 23rd marker signal, a helper marker signal, and a wide screen signal so as to read a wide screen signal in accordance with a combined synchronous signal and a system clock outputted from said data and synchronous signal separating unit;

data reading means for reading a wide screen signal in an interval of a 23rd line marker signal of a video data and for outputting the thusly read wide screen signal;

helper processing means for modulating or demodulating a helper in an interval of a helper marker signal outputted from said marker generating means;

delay compensating means for compensating an interval of a marker signal outputted from the marker generating means as much as the time delayed between the combined video signal outputted from said helper processing means and the combined video signals outputted from an input terminal; and

wide screen signal adding means for adding a wide screen signal outputted from the data reading means to a combined video signal outputted from the helper processing unit in accordance with a marker signal outputted from said delay compensating means.

11. The apparatus of claim 7, wherein said delay compensating means includes:

first field identification signal generating means for identifying a field of a combined video signal outputted through the input terminal;

second field identification signal generating means for identifying a field of a combined video signal outputted from the helper processing means;

delay counting means for counting the difference of the field identifying signals outputted from said second field identification signal generating means and said first field identification signal generating means;

delay signal generating means for outputting marker signals each delayed by the number of clocks from a first clock to a certain clock by counting the marker signal outputted from the marker generating means; and

selecting means for selecting a marker signal corresponding to a selection control signal outputted from said delay counting means of marker signals outputted from said delay signal generating means.

FIG. 1A

11.μs

CB

WSS

27.4μs

HR

FIG. 1B

FIG. 1C

α

CB

t1

WSS

HR

FIG. 2

| RUN-IN | STARTING CODE | BIPHASE DATA |
|--------|---------------|--------------|
| | | |

NUMBER OF ELEMENTS 29 24 84 (14 DATA BITS)

FIG. 3

ELEMENT

1 DATA BIT

LOGIC "1"

LOGIC "0"

# FIG. 4

EP 0 717 568 A2

FIG. 5

# FIG. 6

L23

WSM

10

0        α

11

12

RESET
SIGNAL

HM

15

HM'

14

CS

CLK

BURST
BLANKING
SIGNAL
GENERATING
UNIT

13

# FIG. 8

WSM

106b

WSM

HM

106c

HM

106d

PAL+ID

H   L

AM-HLP
BB-HLP
REC-H
PB-H
TRICK-H
KILL-H

MARKER
SWITCHING
SIGNAL
GENERATING
UNIT

106a

EP 0 717 568 A2

# FIG. 7

FIG.9A

23RD LINE    WSS       25TH LINE

24TH LINE

FIG.9B     L23

FIG.9C     WSM

FIG.9D     HM'

FIG.9E

FIG.9F

FIG.9G     HM

16

FIG.10A

587    622   24        59         275      310   336      371

M4              M1                    M2              M3

FIG.10B

L23

FIG.10C

L23

WSM

# FIG. 11

| AM—HLP | AM—HLP | AM—HLP | AM—HLP | AM—HLP | AM—HLP | STATES OF FIRST THROUGH THIRD SWITCHING UNITS |
|--------|--------|--------|--------|--------|--------|----------------------------------------------|
| L | L | X | X | X | X | OFF |
| H | L | H | L | X | X | ON |
| L | H | H | L | X | H | ON |
| L | H | H | L | X | L | OFF |
| X | X | L | H | H | X | OFF |
| L | H | L | H | L | X | ON |
| H | L | L | H | L | H | ON |
| H | L | L | H | L | L | OFF |

EP 0 717 568 A2

# FIG. 12

EP 0 717 568 A2

# FIG. 13